# EUROPÄISCHE PATENTSCHRIFT

(11) **EP 4 151 896 B1**
(45) Veröffentlichungstag und Bekanntmachung des Hinweises auf die Patenterteilung: **06.05.2026**
(21) Anmeldenummer: 22196287.1
(22) Anmeldetag: 19.09.2022
(51) Int. Cl.: F16L 21/08, F16L 21/06

(54) **ROHRVERBINDUNG**
PIPE JOINT
RACCORD DE TUYAUX

(30) Priorität: 18.09.2021 DE 202021105048 U; 28.04.2022 DE 202022102316 U; 28.04.2022 DE 202022102311 U
(43) Veröffentlichungstag der Anmeldung: 22.03.2023
(73) Patentinhaber: Funke Kunststoffe GmbH, 59071 Hamm-Uentrop (DE)
(72) Erfinder: Funke, Norbert, 48324 Sendenhorst (DE); Funke, Hans Günter, 48324 Sendenhorst (DE)
(74) Vertreter: Patentanwälte Olbricht Buchhold Keulertz

(56) Entgegenhaltungen:
- EP-A1- 0 175 169
- EP-B1- 1 470 357
- EP-B1- 2 050 994
- US-B2- 7 520 539

## Beschreibung

Die Erfindung betrifft eine Rohrverbindung nach dem Oberbegriff des Anspruchs 1.

An die Dichtheit von Rohren werden im Allgemeinen hohe Anforderungen gestellt, wobei ein einzelnes Rohrelement eher selten eine Leckage aufweist. Stattdessen treten Undichtigkeiten regelmäßig dort auf, wo in einer Rohrleitung zwei oder mehrere Rohre miteinander verbunden sind, was im Folgenden als Rohrverbindung bezeichnet wird. Die Undichtigkeiten können aus einer fehlerhaften, unsachgemäßen Verlegung bzw. Handhabung resultieren. Beispielsweise können beim Verlegen der Rohre Fremdkörper, wie Steine, grober Sand oder dergleichen, zwischen Dichtung und Rohr gelangen oder die Dichtung kann versehentlich beschädigt oder abgeschert werden, beispielsweise beim Einstecken eines ersten Rohres mit mangelhaft oder nicht angefastem Spitzende in ein Muffenende eines zweiten Rohres und eine dort befindliche Dichtung.

Durch die Undichtigkeiten können Stoffe, welche in dem Röhrensystem transportiert werden, in die Umgebung austreten. Über dieselben Wege können jedoch auch Stoffe aus der Umgebung der Rohrverbindung in das Innere der Rohre und somit in die darin transportierten Stoffe gelangen, was beispielsweise bei einem Transport von Trinkwasser unter allen Umständen vermieden werden muss. Aus der Praxis sind auch nachträglich auftretende Undichtigkeiten bekannt, beispielsweise Einwurzelungen oder wenn eine verlegte Rohrverbindung verschoben bzw. ungewollt auseinandergezogen wird, was z. B. durch Senkungen im Boden hervorgerufen werden kann, in dem die Rohrleitung verläuft.

Pflanzenwurzeln stellen in der Praxis ein besonderes Problem dar, da diese die Dichtheit einer Rohrverbindung aktiv herabsetzen können. Insbesondere (anfänglich noch kleine) Undichtigkeiten bzw. Hohlräume in der Rohrverbindung bieten Pflanzenwurzeln einen Angriffspunkt, zunächst in die Rohrverbindung einzuwachsen und die Hohlräume im Zuge des Dickenwachstums zu weiten und damit einhergehend neue Hohlräume in der Rohrverbindung für ein tieferes Vordringen zu schaffen, sodass die Pflanzenwurzeln aus der Umgebung der Rohrverbindung bis in den das Innere der Rohrleitung einwachsen können. Folglich sind Pflanzenwurzeln dazu geeignet, ursächlich zu sein für eine Leckage der Rohrverbindung und darüberhinausgehend können diese die Wegbarkeit einer Leckage für eintretende oder austretende Stoffe wesentlich erhöhen.

Zur Schaffung einer hochdichten Rohrverbindung ist es aus der Praxis bekannt, zwei Rohre miteinander zu verschweißen, beispielsweise bei Trinkwasserleitungen, wobei stets hohe Anforderungen an die Sauberkeit zur Herstellung der Schweißverbindung gestellt werden und somit der Arbeitsaufwand vor Ort auf der Baustelle vergleichsweise hoch ist. Ebenso ist regelmäßig ein Verschweißen zur Schaffung einer Rohrverbindung vorgesehen, insbesondere wenn Baumbestand vorhanden ist bzw. eine Bepflanzung geplant ist, um das Einwachsen von Wurzeln, insbesondere die Wurzeln bestimmter Baumarten wie die Linde, verhindern zu können.

Auf ein Verschweißen verzichtend ist aus der EP 0 175 169 A1 eine gattungsgemäße Rohrverbindung bekannt mit einem Schubsicherungsring, welcher zwei zu verbindende Rohre umfangmäßig umgreift. Die Innenoberfläche des Schubsicherungsrings und die Außenoberflächen der Rohre schaffen einen Hohlraum, der als Halteringkammer bezeichnet ist und in dem ein Druckring angeordnet ist, wobei der Druckring dreiseitig in Druckberührung steht, nämlich mit dem einen Rohr längsseitig aufliegend, dem anderen Rohr stirnseitig anliegend und einem Schubsicherungsring innenseitig anliegend. Zugkräften entgegenwirkend ist für den Schubsicherungsring zunächst ein verschiebesicherer Sitz gewährleistet, indem der Schubsicherungsring an der Außenseite des zweiten Rohres mit einer radial nach innen ragenden Klaue einen Bund hintergreift. Eine schubgesicherte Rohrverbindung wird gebildet, indem der Schubsicherungsring zudem auf der Innenseite einen Haltering aufweist, welcher einseitig eine Verzahnung aufweist, welche beim Verspannen des Schubsicherungsrings in die Außenoberfläche des ersten Rohres eindringt. Der Schubsicherungsring ist mehrteilig aufgebaut, wobei die einzelnen Konstruktionselemente funktional divergieren und vor dem Steckvorgang des Spitzendes des ersten Rohres in das Muffenende des zweiten Rohres auf das Spitzende aufzuschieben sind.

Die bekannten Rohrverbindungen eint das Problem des Auftretens von Undichtigkeiten, insbesondere in Folge von Verlegefehlern oder einer unsachgemäßen Handhabung. Obschon grundsätzlich eine hohe Dichtheit erwartet wird, kann regelmäßig nicht verhindert werden, dass Pflanzenwurzeln einwachsen und Leckagen schaffen bzw. Leckagen vergrößern. Sofern in der Praxis jedoch eine hochdichte Rohrverbindung erforderlich ist, muss dafür auf wirtschaftlich aufwendige Fügeverfahren zurückgegriffen werden, exemplarisch auf das Schweißen.

Aus der EP 1 470 357 B1, die als am nächsten kommender Stand der Technik angesehen wird, ist eine Klemme zum Verbinden von röhrenförmigen Körpern bekannt, die zwar insgesamt mehrteilig ausgestaltet ist, am Umfang der röhrenförmigen Körper jedoch eine einzige Spannstelle aufweist, die zur Verringerung des Durchmessers der Klemme und somit für die Übertragung der Klemmkräfte auf die röhrenförmigen Körper maßgeblich ist.

Aus der US 7 520 539 B2 ist eine Rohrklemme mit einer abgedichteten Mittelrippe bekannt, die ebenfalls am Umfang eine einzige Spannstelle aufweist.

Aus der EP 0 175 169 A1 ist eine Muffenverbindung bekannt, die speziell ausgestaltete Rohre betrifft und bei der die Rohrmuffe einen Bund aufweist, also einen radial nach außen ragenden Kragen, der das Ende der Muffe und auch eines der beiden Ende des entsprechenden Rohrs bildet. Bei der Muffenverbindung kann ein Schubsicherungsring an dem einen Rohr entweder durch Klauen, die mit Schrägflächen versehen sind, oder durch ein Gewinde gegen einen Bund gespannt werden, den das andere Rohr aufweist. Mit dem Gewinde des Schubsicherungsrings wirkt ein Gewinde zusammen, das als zweiteiliger Ring ausgestaltet ist, wobei die beiden Teilringe des Gewindes beispielsweise mittels Schraubenbolzen zusammengezogen werden.

Der Erfindung liegt die Aufgabe zugrunde, eine gattungsgemäße Rohrverbindung dahingehend zu verbessern, dass eine über lange Zeit zuverlässig dichte Rohrverbindung geschaffen und eine einfache Handhabung der verwendeten Bauteile bei der Herstellung der Rohrverbindung ermöglicht wird. In Berücksichtigung dessen gilt es, eine wirtschaftlich vorteilhafte Dichtung anzugeben, welche die Herstellung einer solchen Rohrverbindung ermöglicht.

Diese Aufgabe wird gelöst durch eine Rohrverbindung nach den Merkmalen des Anspruchs 1. Vorteilhafte Ausgestaltungen werden in den Unteransprüchen beschrieben.

Merkmale der Erfindung werden nachfolgend beschrieben. Diese Gestaltungsmerkmale können im Zusammenhang mit der Erfindung verwirklicht werden oder auch unabhängig von der Erfindung eigenständig erfinderisch sein, und sie können entweder einzeln und unabhängig voneinander oder auch in einer beliebigen Kombination verwirklicht werden, einschließlich der Verwirklichung sämtlicher genannter Merkmale, sofern eine Kombination nicht ausdrücklich oder technisch zwingend ausgeschlossen ist.

Die Erfindung schlägt mit anderen Worten vor, dass in einem Hohlraum zwischen der Innenoberfläche des Halterings und den Außenoberflächen der zu verbindenden Rohre eine Dichtung angeordnet ist, welche sich von dem einen bis auf das andere Rohr erstreckt, sodass die vorgeschlagene Dichtung einen Übergangsbereich von dem einen auf das andere Rohr abdeckt.

Die erfindungsgemäße Rohrverbindung ermöglicht einen hochdichten, einfach auszuführenden Übergang von dem einen zum anderen Rohr, sodass beispielsweise zwei Rohre jeweils über die Spitzenden hochdicht miteinander verbindbar sind. Die Dichtung bildet eine flüssigkeitsdichte Barriere, wobei das Material der Dichtung vorteilhaft an die Medien angepasst sein kann, welche durch die Rohrverbindung geleitet werden, beispielsweise ölhaltige Abwässer oder dergleichen. Die flüssigkeitsdichte Barriere ermöglicht jedoch ferner den Ausschluss des Eindringens von Stoffen aus der Umgebung in die Rohrverbindung, beispielswiese Radon bzw. radonhaltige Stoffe und insofern eine besonders hohe Dichtwirkung. Weiterhin bietet die Dichtung auch einen Schutz gegen das Eindringen von Pflanzenwurzeln, welche die Dichtheit der zunächst dichten Rohrverbindung im Laufe der Zeit beeinträchtigen können. Schließlich bewirkt die Dichtung, die sich über beide Rohre erstreckt, auch einen erhöhten Widerstand gegen Kräfte, welche die beiden Rohre auseinanderzuziehen bestrebt sind, so dass auch dadurch die Dichtheit der Rohverbindung verbessert ist.

Erfindungsgemäß ist der Haltering entlang seines Umfangs in Segmente unterteilt, die als Teilringe bezeichnet werden und sich jeweils um einen Umfangsabschnitt des ersten Rohres und des zweiten Rohres erstrecken. Der Haltering kann aus Teilringen zusammengesetzt sein, die jeweils einen Bogen als Kreisabschnitt beschreiben, wobei die Teilringe gemeinsam den vollständigen Haltering bilden können, so dass bei einem aus zwei Teilringen bestehenden Haltering dementsprechend jeder Teilring einen Bogen von etwa 180° beschreibt. Vorzugsweise können die Teilringe jeweils einen etwas kürzeren Bogen beschreiben, z. B. die beiden Teilringe einen Bogen von etwas weniger als 180°, so dass die Teilringe insgesamt einen Kreisabschnitt von weniger als 360° beschreiben. Somit verbleibt noch ein Spiel, das eine maximal wirksame Spannung ermöglicht, mit welcher die Teilringe auf dem ersten und dem zweiten Rohr festgelegt werden können, wenn der Abstand zweier benachbarter Teilringe mit Hilfe von Spannmitteln verringert wird, ohne dass der Aufbau einer solchen Spannung dadurch verhindert würde, dass die Teilringe aneinanderstoßen. Dadurch, dass der Haltering in Teilringe aufgeteilt sein kann, kann auch die Halterippe auf mehrere nach innen ragende Halterippenabschnitte aufgeteilt sein, indem jeder Teilring wenigstens einen eigenen Halterippenabschnitt aufweist.

Die Teilringe können zunächst in einer vormontierten Anordnung vorliegen und einen ersten Abstand zueinander aufweisen. Beispielsweise können die Teilringe völlig getrennt voneinander angeordnet sein. In der vormontierten Anordnung können die Teilringe jedoch auch einen geschlossenen Ring bilden, wobei die Lücken zwischen den Teilringen als ein erster Abstand vergleichsweise groß sein können. Dadurch, dass die Teilringe auch bereits in ihrer vormontierten Anordnung zusammenhängen können, kann die Handhabung erleichtert und insbesondere Arbeiten vor Ort auf der Baustelle beschleunigt werden, im Vergleich dazu, die Teilringe separat handhaben, aufschieben und nach ihrer Anordnung auf einem Rohr zu dem Haltering zusammenfügen zu müssen. Der sogenannte erste Abstand zwischen den Teilringen kann dabei so groß sein, dass sie in der vormontierten Anordnung über die Wulst des zweiten Rohres geführt werden können.

Die nach innen ragenden Halterippenabschnitte können dementsprechend weit voneinander beabstandet sein. Eine Montage des Halterings kann somit, bedingt durch die Unterteilung des Halterings entlang des Umfangs in Segmente, grundsätzlich auch dann noch möglich sein, nachdem das Spitzende des ersten Rohres bereits in das Muffenende des zweiten Rohres gesteckt wurde. Infolgedessen können mit dem vorgeschlagenen Haltering in wirtschaftlich vorteilhafter Weise bereits bestehende Rohrverbindungen im Bedarfsfall mittels vorgeschlagenem Haltering nachträglich ertüchtigt werden gegen abziehende Kräfte.

Aus einer ersten, vormontierten Anordnung können die Teilringe in eine zweite Anordnung bewegt werden, die als montierte Anordnung bezeichnet ist und in welcher die Teilringe einen zweiten Abstand zueinander aufweisen können, der geringer ist als der erste Abstand. Der Haltering kann daher vorteilhaft einen Umfang aufweisen, der kleiner ist als der Umfang in der ersten, vormontierten Anordnung, und der daran angepasst ist, dass in der montierten Anordnung eine Halterippe, welche die Wulst des zweiten Rohres hintergreift, einen formschlüssigen Halt des Halterings auf dem zweiten Rohr bewirkt, der den Haltering gegen abziehende Kräfte auf dem zweiten Rohr sichert. Die nach innen ragenden Halterippenabschnitte können dementsprechend weniger weit voneinander beabstandet sein als in der ersten Anordnung, so dass sie die Wulst des zweiten Rohres hintergreifen. Die Teilringe können in der zweiten Anordnung durch Spannmittel zusammengehalten werden, so dass der Durchmesser des Halterings und der Halterippe nicht unerwünscht erweitert werden kann. Zudem kann mittels der Spannmittel auch ein radial nach innen wirkender Druck aufgebaut werden, um wie weiter oben erwähnt den Haltering auf den Rohren zu fixieren und eine Druckberührung der Dichtung zu bewirken.

In der Praxis sind Rohre verbreitet aufweisend ein Spitzende und ein Muffenende, wobei zur Verbindung zwei gleichartiger Rohre sich ein Spitzende eines ersten Rohres in das Muffenende eines zweiten Rohres erstreckt. Das zweite Rohr weist erfindungsgemäß eine umlaufende Wulst auf, die eine radial nach innen offene Sicke bildet, beispielsweise zur Aufnahme einer Dichtung zur inneren Abdichtung der Rohrverbindung. Im Sinne einer besonders dichten Rohrverbindung ist erfindungsgemäß vorgesehen, dass sich die Dichtung von dem ersten Rohr bis auf die Wulst des zweiten Rohres erstreckt. In Art einer Einfassung der Muffenverbindung wird auf diese Weise eine besonders wirkungsvolle Barriere gegen ein- bzw. austretende Flüssigkeiten oder einwachsende Pflanzenwurzeln geschaffen.

Vorteilhafterweise kann die Dichtung sowohl den Rohren als auch dem Haltering anliegen und somit in Druckberührung stehen mit den Außenoberflächen der beiden Rohre und der Innenoberfläche des Halterings. Erfindungswesentlich ist, dass die Dichtung aufliegend ausgestaltet ist und zwar auf beiden zu verbindenden Rohren. Zur Herstellung einer Druckberührung kann vorgesehen sein, dass über den Haltering eine gegen die als Rohrachse bezeichnete Rotationsachse der Rohre gerichtete Radialkraft eingeleitet wird, welche die Dichtung auf die Außenoberflächen der Rohre presst. Dadurch kann die Dichtung infolge der Haftreibung eine verschiebesichere bzw. zugfeste, kraftschlüssige Rohrverbindung ermöglichen, insbesondere mit einer rohrparallel zunehmenden Dichtungsbreite.

Vorzugsweise kann die Dichtung einen Kunststoff aufweisen, wobei der Kunststoff wenigstens geringfügig leichter verformbar ist als der Rohrwerkstoff.

In einer Ausgestaltung können elastomerwerkstoffhaltige Dichtungen vorgesehen sein. Die Elastizität dieser Werkstoffe ermöglicht einen Ausgleich von Maßtoleranzen zwischen den zu verbindenden Rohren bzw. zwischen dem Haltering und den Rohren. Besonders bevorzugt kann dafür ein Dichtungsring verwendet werden, dessen Handhabung hinlänglich bekannt und dessen Herstellung besonders einfach ist.

In einer Ausgestaltung wird eine formstabile Dichtung verwendet, die einen thermoplastischen Werkstoff, beispielsweise Polyamid aufweist und im Vergleich zu anderen typischen Dichtungsmaterialien einen höheren Widerstand gegen Verformungen bietet, um insbesondere das Eindringen von Wurzeln in den Innenraum der Rohrverbindung unterbinden zu können. Polyamidhaltige Dichtungen ließen sich einfach herstellen, beispielsweise mittels Spritzgießen oder dergleichen.

Für eine besonders wurzeldichte Rohrverbindung kann vorgesehen sein, dass der Hohlraum durch die Dichtung weitestgehend ausgefüllt ist, um Pflanzenwurzeln möglichst wenige Angriffspunkte in Gestalt von Hohlräumen, Poren oder dergleichen für ein Einwachsen offen zu halten. Abgestimmt auf die Formgebung der Rohre und des Halterings kann die Dichtung daher einen daran angepassten Querschnitt aufweisen, um den Hohlraum möglichst vollständig auszufüllen.

Die Erfindung geht von der Überlegung aus, eine hochdichte Rohrverbindung mittels auf den Rohren aufliegender Dichtung zu schaffen und diese gegebenenfalls mit Druck zu beaufschlagen. Im Sinne einer besonders einfachen Montage kann die Dichtung durch eine Vergussmasse gebildet sein, die in den Hohlraum eingebracht ist. Mit vergleichsweise hohem Druck können abdichtende Massen, beispielsweise ein zweikomponentiges Harz oder dergleichen, in den Hohlraum einspritzbar sein, und zwar im Anschluss an die Montage der Rohrverbindung, sodass der Ausgleich etwaiger Maßtoleranzen wirtschaftlich vorteilhaft erheblich vereinfacht wird. Durch das Einbringen einer Vergussmasse kann jegliche Geometrie des Hohlraums nachgebildet werden. Das Einbringen einer Vergussmasse kann zudem vorteilhaft sein, indem die Vergussmasse nach dem Abbinden bzw. Aushärten Klebeigenschaften entfaltet und die Rohre miteinander bzw. die Rohre mit dem Haltering zur Schaffung einer zugfesten Rohrverbindung verbindet.

Mittels der Vergussmasse ist es ebenfalls und ohne die Erfordernis eines speziell geformten Dichtungsrings möglich, den Hohlraum im Wesentlichen oder sogar vollständig auszufüllen, um beispielsweise einem Wachstumsdruck von Pflanzenwurzeln Widerstand entgegensetzen zu können. Als Indikator einer weitestgehenden Hohlraumfüllung kann beispielsweise eine aus der Rohrverbindung austretende Vergussmasse fungieren.

In einer Ausgestaltung können Spannmittel besonders wirkungsvoll sein, um den Haltering auf den Rohren zu fixieren und eine Druckberührung der Dichtung zu bewirken. Im Besonderen Dichtungen aufweisend Polyamid oder dergleichen können bei hohen Spannkräften verformbar sein und können somit besonders wirkungsvoll einen Wurzeleinwuchs verhindern.

Wenn die Dichtung den Hohlraum im Wesentlichen ausfüllt, bedeutet dies, dass eine als Formteil ausgestaltete Dichtung beispielsweise eine oder mehrere Rippen aufweisen kann, so dass sich neben den Rippen kleinere Bereiche ergeben können, in denen die Dichtung dem jeweils radial benachbarten Bauteil, also einem Rohr oder dem Haltering, nicht anliegt und daher den Hohlraum zwar im Wesentlichen, aber nicht vollständig ausfüllt. Und wenn die Dichtung durch eine Vergussmasse gebildet ist, kann die Viskosität der Vergussmasse beim Einfüllen bewirken, dass bestimmte Eckbereiche in dem Hohlraum zwischen den Rohren und dem Haltering nicht bis in den letzten Winkel von dem Dichtungswerkstoff ausgefüllt sind. Da die Dichtung den Hohlraum jedoch im Wesentlichen ausfüllt, ist jedenfalls sichergestellt, dass kein durchgängiger Kanal existiert, der eine Verbindung von außen in das Innere der Rohre schafft und somit eine Undichtigkeit oder einen Wurzelweg schaffen würde.

Der Dichtungsring, der sich über beide Rohre der Rohrverbindung erstreckt, dient der Abdichtung der beiden Rohre untereinander. Eine jeweilige weitere Dichtung kann zwischen dem Haltering und einer äußeren Oberfläche des ersten und / oder des zweiten Rohrs vorgesehen sein, beispielsweise um das Eindringen von Wurzeln zwischen den Haltering und die Rohre zu verhindern. Diese zusätzliche Dichtung kann als O-Ring oder als Profildichtungsring mit einer bestimmten Querschnittsgeometrie ausgestaltet sein oder auch durch eine Dichtungsmasse geschaffen werden, die in einen Spalt oder Hohlraum eingefüllt wird, der zwischen dem Haltering und den Rohren verläuft.

Es kann vorgesehen sein, dass die Halterippe, wenn die Teilringe sich in ihrer montierten Anordnung befinden und entweder annähernd oder sogar tatsächlich einander anliegen, keine kreisförmige Innenkontur aufweist. Vielmehr können sich die Halterippenabschnitte jeweils unterschiedlich weit radial nach innen erstrecken, so dass sie eine gemeinsame, von einem Kreisrund abweichende Innenkontur schaffen können. An den jeweiligen Enden der Halterippenabschnitte, wo ein Teilring einem anderen Teilring benachbart ist, kann der Haltering einen größeren Innendurchmesser aufweisen als im umfangsmäßigen Abstand von diesem Ende.

Durch diese vom Kreisrund abweichende Innenkontur des Halterings kann bereits nach einer vergleichsweise geringen Vergrößerung des Abstands zwischen den Teilringen ermöglicht werden, den Haltering in axialer Richtung von dem zweiten Rohr abzuziehen bzw. in axialer Richtung auf das zweite Rohr und über dessen umlaufende Wulst aufzuschieben. Die Spannmittel, die vorzugsweise die Teilringe zusammenhalten, können also mit einem vergleichsweise geringen Verstellbereich die Bewegung der Teilringe zwischen ihrer vormontierten und ihrer montierten Anordnung ermöglichen. Dies gibt für die Konstruktion des Halterings größere konstruktive Freiheiten, was die Ausgestaltung der Spannmittel angeht, so dass beispielsweise Exzenter-Spannmittel verwendet werden können, die im Vergleich zu anderen Spannmitteln einen vergleichsweise kleinen Verstellbereich aufweisen. Wenn jedoch Schrauben als Spannmittel verwendet werden, um die Teilringe ähnlich wie die Elemente einer Rohrschelle miteinander verbinden zu können, so kann die Betätigung der Schraube bereits mit vergleichsweise wenigen Umdrehungen die Bewegung der Teilringe zwischen ihrer vormontierten und ihrer montierten Anordnung bewirken, so dass dem Anwender die Handhabung bei der Herstellung der Rohrverbindung erleichtert wird und auch in kürzerer Zeit ermöglicht wird.

Insbesondere zur Schaffung einer zugfesten Rohrverbindung mittels Formschluss kann vorgesehen sein, dass der Haltering einen Krallenabschnitt aufweist, welcher sich bis über eine bestimmte axiale Länge eines Rohres erstreckt, beispielsweise über das Spitzende des ersten Rohres. Eine Haltekralle kann an einer bestimmten Stelle dieser axialen Länge am Umfang des Halterings vorgesehen sein. Spannmittel können dort angeordnet sein, wo sich am Umfang des Halterings die Haltekralle befindet. Auf diese Weise kann sichergestellt werden, dass die Haltekralle an das erste Rohr angepresst wird und in die Oberfläche des ersten Rohres eindringen kann, um die gewünschte Sicherung gegen eine Längsbeweglichkeit des ersten Rohres in Bezug auf den Haltering zu bewirken.

In einer Ausgestaltung kann der Haltering eine oder mehrere Haltekrallen aufweisen, welche in der Art angeordnet sind, dass eine oder mehrere Haltekrallen in die Oberfläche beider Rohre eindringen, beispielsweise für eine zugfeste Verbindung von zwei Rohren, welche jeweils über ein Spitzende verbunden werden sollen.

Ferner kann vorgesehen sein, dass Spannmittel in axialer Richtung an dem Haltering in dem Bereich angeordnet sind, wo am Umfang des Halterings die Halterippe verläuft. Wenn beispielsweise vorgesehen ist, dass auch an der Außenseite des Halterings dort, wo die Halterippe nach innen ragt, eine Aussteifungsrippe nach außen ragt, können die Spannmittel in axialer Richtung geringfügig versetzt angeordnet sein, um die äußere Aussteifungsrippe nicht zu unterbrechen. Sie befinden sich trotz dieses geringfügigen axialen Versatzes in dem Bereich, in welchem die Spannkraft auf die Halterippe in der Art wirkt, dass sie einer unerwünschten Aufweitung der Halterippe entgegenwirkt.

Aus einer ähnlichen Überlegung können Spannmittel vorzugsweise dort am Haltering angeordnet sein, wo im Hohlraum die Dichtung angeordnet ist, so dass die Spannmittel eine Druckberührung hervorrufen bzw. verstärken und die Abdichtung der Rohverbindung verbessern. Hohe Spannkräfte können für bestimmte Dichtungswerkstoffe, die vergleichsweise wenig verformbar sind, wie beispielsweise Polyamid, eine besonders wirkungsvolle Abdichtung bedingen, in dem die Dichtung unter hohem Einspanndruck verformt wird und im Zuge dessen Hohlräume ausgefüllt werden, bildend eine widerstandsfähige, effektive Wurzelbarriere.

Unabhängig davon, ob die Dichtung durch eine Vergussmasse gebildet oder als Formteil ausgestaltet ist, kann die Wirkung als Wurzelbarriere dadurch unterstützt werden, dass der Werkstoff, aus dem die Dichtung besteht, wurzelfeindliche Zuschlagstoffe enthält. Wurzeln, die zunächst in Kontakt mit der Dichtung kommen, suchen somit einen anderen Weg für ihr weiteres Wachstum. Wenn die Dichtung nicht durch eine Vergussmasse gebildet wird, sondern als Formteil ausgestaltet ist, kann ihre Formgebung eine Wirkung als Wurzelbarriere unterstützen. Beispielsweise kann die Dichtung dort, wo sie einem Rohr und / oder dem Haltering anliegt, eine oder mehrere umfangsmäßig verlaufende Rippen aufweisen. Dadurch ergeben sich im Bereich einer Rippe aufgrund der kleineren Kontaktfläche, mit der die Dichtung im Vergleich zu ihrer gesamten axialen Länge dem jeweiligen radial benachbarten Bauteil anliegt, höhere Flächenpressungen, die somit einen höheren Widerstand für eine Wurzel bieten, die zwischen Dichtung und Rohr oder zwischen Dichtung und Haltering einzudringen versucht.

Es kann daher in einer als vorteilhaft erachteten Ausgestaltung vorgesehen sein, in axialer Richtung zwei oder mehr Spannmittel hintereinander anzuordnen, so dass die vorgenannten Auswirkungen auf die Haltekralle, auf die Halterippe und/oder auf die Dichtung erzielt werden können.

In einer Ausgestaltung kann der Krallenabschnitt an seinem äußeren Umfang geschlossen ausgestaltet sein und an seiner inneren Umfangsfläche eine Mulde aufweisen, die radial nach innen offen ist und in die eine Haltekralle eingesetzt werden kann, die über die innere Umfangsfläche des Krallenabschnitts radial nach innen ragt. Hierdurch wird die Herstellung des Halterings vereinfacht, da keine Fenster im Krallenabschnitt erforderlich sind, über welche die Haltekralle von außen zugänglich ist. Somit besteht nicht die Gefahr, dass vor der Montage des Halterings eine versehentliche Druckeinwirkung von außen auf die Haltekralle dazu führt, dass die Haltekralle aus dem erwähnten Fenster des Krallenabschnitts herausgedrückt wird und verloren gehen kann.

Vorteilhaft kann vorgesehen sein, dass nicht nur eine einzige Haltekralle verwendet wird, sondern dass wenigstens zwei, und insbesondere vorteilhaft mehrere Haltekrallen über den Umfang des Krallenabschnitts verteilt angeordnet sind. Auf diese Weise werden zirkumferent möglichst gleiche Haltekräfte erreicht, die das erste Rohr in der Muffe des zweiten Rohres gegen abziehende Kräfte sichern. Aus dem Grund kann vorteilhaft die Anordnung der zwei oder mehr Haltekrallen in der Art vorgesehen sein, dass die Haltekrallen in Art eines gleichmäßigen Musters um den Umfang des Krallenabschnitts verteilt sind, z.B. indem sie gleiche Abstände zueinander aufweisen, symmetrisch oder paarweise angeordnet sind oder dergleichen.

Wirtschaftlich vorteilhaft können Elemente als Haltekrallen verwendet werden, die nicht eigens als Haltekralle entworfen und hergestellt sind, sondern beispielsweise als Halbzeuge oder auch als Fertigteile handelsüblich und dementsprechend wirtschaftlich erhältlich sind. Die Haltekralle kann in einer Ausgestaltung ein Gewinde aufweisen. Dementsprechend können Schrauben, passend abgelängte Stücke von Gewindestangen oder dergleichen verwendet werden. Die mit einem Gewinde versehene Haltekralle erstreckt sich in axialer Richtung des ersten Rohres, so dass die einzelnen Gewindegänge Krallen bilden, die quer zur Längsrichtung des Rohres verlaufen und dementsprechend eine Absicherung gegen abziehende Kräfte, also gegen eine Bewegung des Rohres in seiner Längsrichtung bewirken, die das erste Rohr von dem zweiten Rohr abzuziehen bestrebt sind. Wenn Schrauben als Haltekrallen verwendet werden, können diese beispielsweise schräg in den Krallenabschnitt eingesetzt sein, so dass nicht der Schraubenkopf, sondern vielmehr das Gewinde radial nach innen übersteht und mit dem ersten Rohr zusammenwirken kann. Wenn jedoch der Schraubenkopf ebenfalls eine schmale Kante bildet, wie dies beispielsweise bei Senkkopfschrauben der Fall ist, kann die Schrägstellung der Schraube so gewählt sein, dass sowohl die umlaufende äußere Kante des Schraubenkopfes als auch ein Abschnitt des Gewindes über die innere Oberfläche des Krallenabschnitts radial nach innen ragt.

In einer Ausgestaltung kann der Haltering aus lediglich zwei Teilringen bestehen. Dies erleichtert die Handhabung des Halterings in der vormontierten Anordnung, denn entweder müssen die einzelnen Teilringe einzeln gehandhabt werden, was mit einer geringeren Anzahl einfacher möglich ist als mit einer größeren Anzahl, oder die Teilringe sind auch bereits in der vormontierten Anordnung miteinander verbunden, vergleichsweise locker und dementsprechend beweglich, so dass auch in diesem Fall eine geringere Anzahl an Teilringen deren korrekte Ausrichtung auf dem zweiten Rohr erleichtert, bevor die Spannmittel gespannt werden können.

In einer Ausgestaltung können die Spannmittel als Verschraubungen ausgestaltet sein. Dies ermöglicht die Verwendung sehr preisgünstiger Bauteile, zu dem ist für die Betätigung der Verschraubung an praktisch jeder Baustelle das geeignete Werkzeug standardmäßig verfügbar, so dass die Betätigung der Spannmittel problemlos sichergestellt ist und häufig mit motorischen Hilfsmitteln wie zum Beispiel einem Akkuschrauber für den Anwender besonders einfach ist. Wenn, wie dies in der Praxis häufig der Fall ist, sich bei dem erwähnten Akkuschrauber ein bestimmtes Anzugsmoment festlegen lässt, kann auf besonders einfache Weise sichergestellt werden, dass die Spannmittel mit der vorgesehenen Spannkraft wirken, so dass die korrekte Montage des Halterings auf besonders einfache Weise gewährleistet werden kann.

Beispielsweise kann die Haltekralle als Madenschraube ausgestaltet sein, so dass der Krallenabschnitt nicht an die Aufnahme eines Schraubenkopfes angepasst sein muss und dementsprechend konstruktiv einfach sowie preisgünstig hergestellt werden kann. Die Madenschrauben weisen an einem Ende einen Kraftangriff auf, beispielsweise in Form eines Schlitzes, eines Kreuzschlitzes, eines Innensechskants oder dergleichen, und am gegenüberliegenden Ende weisen sie typischerweise eine Spitze auf. Durch entsprechende Bemaßung einer Ausnehmung, die in Form eines Fensters oder einer Mulde in dem Krallenabschnitt des Halterings angeordnet ist und zur Aufnahme der Haltekralle dient, kann eine einfache Befestigung der Madenschraube im Haltering erreicht werden. Die Ausnehmung kann so kurz bemessen sein, dass die Madenschraube mit ihrer Spitze in den Werkstoff des Krallenabschnitts eingedrückt wird und erst dann mit ihrem gegenüberliegenden Ende endgültig in die Ausnehmung eingeführt werden kann. Hierdurch ist die Madenschraube ohne Verwendung zusätzlicher Mittel, beispielsweise Klebstoff, einer Halteklammer oder dergleichen in der Ausnehmung gehalten, so dass sie bis zur Montage des Halterings an ihrer vorgesehenen Position verbleibt.

Die zugfeste Rohrverbindung kann zur Verbindung zweier gleichartiger Rohre dienen, wobei jedes Rohr einerseits ein Spitzende und andererseits ein Muffenende aufweist. **In** einer Ausgestaltung kann jedoch vorgesehen sein, dass Rohre miteinander verbunden werden, die besonders einfach und preisgünstig hergestellt werden können, indem sie bei der Herstellung nicht mit einem Muffenende versehen werden müssen und die dementsprechend an beiden Enden jeweils ein Spitzende aufweisen. Die Verbindung zweier solcher ersten Rohre erfolgt mithilfe eines Verbindungsbauteils, welches als Doppelmuffe ausgestaltet ist, also als ein zweites Rohr, welches an beiden Enden jeweils eine Muffe aufweist. Diese Doppelmuffe ist typischerweise nicht so lang wie eines der beiden anderen, ersten Rohre. Während die ersten Rohre im Extrusionsverfahren hergestellt werden können, kann die Doppelmuffe als Spritzgussteil hergestellt werden, und um die Formkosten für die Spritzgussform möglichst gering zu halten, kann die Doppelmuffe eine Länge aufweisen, die im Bereich eines oder weniger Dezimeter liegt. Die Ausgestaltung als Spritzgussteil ermöglicht eine präzise Ausgestaltung der umlaufenden Wulst mit geringen Übergangsradien, also eine Ausgestaltung der Wulst mit einem möglichst eckigen Querschnitt. Hierdurch wird eine besonders zuverlässige formschlüssige Festlegung des Halterings an dem zweiten Rohr ermöglicht, da aufgrund dieser präzisen und nahezu eckigen Ausgestaltung der Wulst hohe Rückhaltekräfte erreicht werden und auch beim Aufbringen hoher abziehender Kräfte der Haltering nicht über die Wulst gezogen werden kann, wie dies bei einer Wulst mit einer stark verrundeten Querschnittskontur ansonsten nicht auszuschließen wäre.

Der Haltering kann mittels der Halterippe die Wulst des zweiten Rohres in der Art übergreifen, dass der Haltering auf dem zweiten Rohr gegen abziehende Kräfte gesichert ist, also gegen Kräfte, die den Haltering von dem zweiten Rohr abzuziehen bestrebt sind. Von dem Ende des zweiten Rohres her betrachtet, aus dem das erste Rohr herausragt, kann die Halterippe des Halterings also die Wulst des zweiten Rohres hintergreifen. In einer Ausgestaltung kann vorgesehen sein, dass der Haltering jedoch nicht nur gegen abziehende, sondern auch gegen aufschiebende Kräfte gesichert ist und dementsprechend in beiden axialen Richtungen mithilfe der Wulst formschlüssig verschiebesicher an dem zweiten Rohr festgelegt ist. Dadurch ist gewährleistet, dass Bewegungen verhindert werden, mit denen der Haltering gelockert werden kann, so dass ein möglichst stabiler Zusammenhalt sämtlicher Komponenten der Rohrverbindung gewährleistet werden kann.

In einer Ausgestaltung bestehen die beiden Rohre aus Kunststoff, so dass die Vorteile von Kunststoffrohren genutzt werden können. Die erfindungsgemäße Rohrverbindung stellt auch bei Kunststoffrohren, die im Vergleich zu mineralischen Rohren z. B. aus Beton leichter verformbar sind, eine zuverlässig und über lange Zeit dichte Rohrverbindung sicher.

Die Dichtung ist für eine Rohrverbindung einer der zuvor beschriebenen Ausgestaltungen vorgesehen. Die Dichtung ist im Innern des Hohlraumes zwischen dem Haltering und den Rohren angeordnet, wobei die Dichtung vorschlagsgemäß beiden Rohren wenigstens abschnittsweise aufliegend ausgestaltet ist. Erfindungsgemäß liegt die Dichtung den Rohren umfangmäßig auf, wobei sich die Dichtung den Übergang abdeckend von dem einen Rohr auf das andere Rohr erstreckt, sodass keine Flüssigkeiten aus der Rohrverbindung austreten oder in die Rohrverbindung eindringen können. Dementsprechend weist die Dichtung zwei Abschnitte mit unterschiedlichen Durchmessern auf, nämlich einen ersten Abschnitt, mit dem sie dem ersten Rohr anliegt, welches ein Spitzende aufweist, und einen zweiten Abschnitt mit größerem Durchmesser, mit dem sie dem zweiten Rohr anliegt, welches ein Muffenende aufweist.

Die Dichtung liegt mit einem dritten Abschnitt, der einen noch größeren Durchmesser aufweist als der zweite Abschnitt, auf der Wulst des zweiten Rohres auf zur Schaffung einer hochdichten Rohrverbindung. Als Wirkstoff kann der Dichtung exemplarisch eine Vergussmasse zu Grunde liegen, welche beispielsweise mittels Injektion in den Hohlraum eingebracht werden kann. Dadurch kann erreicht werden, dass der Hohlraum weitestgehend gefüllt ist, in der Art, dass der Hohlraum im Übergangsbereich von dem einen Rohr auf das andere Rohr ausgefüllt ist, sodass die Vergussmasse einerseits den Außenoberflächen der Rohre aufliegt und andererseits der Innenoberfläche des Halterings anliegt. Im Übrigen sind die zuvor für die Rohrverbindung beschriebenen Merkmale, Ausgestaltungen und Vorteile auf die beanspruchte Dichtung übertragbar, so dass die Dichtung auch, wie weiter oben erwähnt, als Formteil ausgestaltet sein kann.

Alle zuvor beschriebenen bzw. beanspruchten Merkmale haben jeweils eine eigenständige erfinderische Bedeutung. Sie können in beliebiger Kombination zusammen oder auch einzeln und unabhängig voneinander genutzt werden. Die beschriebenen Ausgestaltungen der Rohrverbindung können dementsprechend entweder einzeln und unabhängig voneinander oder auch in einer beliebigen Kombination, einschließlich der Verwirklichung sämtlicher genannter Merkmale, bei der Rohrverbindung verwirklicht sein, sofern eine Kombination nicht ausdrücklich oder technisch zwingend ausgeschlossen ist.

Ausführungsbeispiele der Erfindung werden anhand der rein schematischen Darstellungen nachfolgend näher erläutert. Dabei zeigt
- Fig. 1: einen Längsschnitt durch ein erstes Ausführungsbeispiel einer hochdichten Rohrverbindung, einschließlich eines vergrößerten Ausschnitts,
- Fig. 2: eine perspektivische Ansicht auf die Rohrverbindung aus Fig. 1, und
- Fig. 3: einen vergrößerten Ausschnitt durch ein zweites Ausführungsbeispiel einer zugfesten Rohrverbindung.

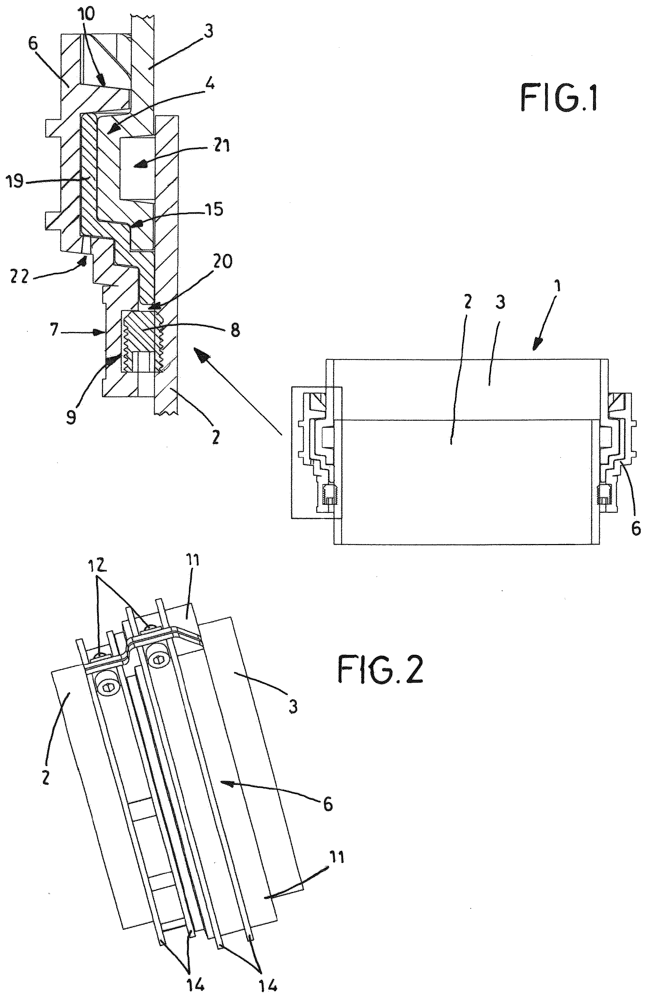

In Fig. 1 ist eine hochdichte Rohrverbindung 1 dargestellt, wobei ein erstes Rohr 2 ein Spitzende aufweist, mit welchem es in ein Muffenende eines zweiten Rohres 3 eintaucht. Das zweite Rohr 3 weist eine nach außen ragende, umlaufende Wulst 4 auf. In die Wulst 4, die eine radial nach innen offene Sicke 21 ausbildet, kann ein Dichtungsring eingelegt sein, wie dies von Rohrverbindungen an sich bekannt ist. Um beim Zusammenfügen der Rohre 2, 3 einen solchen Dichtungsring nicht zu beschädigen, ist das Spitzende typischerweise angeschrägt. Bei dem dargestellten Ausführungsbeispiel wird eine besonders preisgünstige Herstellung des ersten Rohres 2 dadurch unterstützt, dass dieses möglichst wenig Bearbeitungsschritte erfordert. Das Spitzende des ersten Rohres 2 ist daher nicht angeschrägt und in der Sicke 21 ist kein Dichtungsring vorgesehen.

Im Inneren des Halterings 6 ist eine Dichtung 19 in einem Hohlraum 20 angeordnet, welche als Vergussmasse in Gestalt eines zweikomponentigen Harzes durch einen oder mehrere Injektionskanäle 22 in den Hohlraum 20 eingespritzt wurde, nachdem der Haltering 6 zur Herstellung der Rohrverbindung 1 montiert wurde. Die Injektion erfolgt weitestgehend hohlraumfüllend, zumindest liegt die Vergussmasse umfangmäßig der Innenoberfläche des Halterings 6 bzw. den Außenoberflächen der Rohre 2, 3 im Wesentlichen an, insbesondere im Bereich des Übergangs von dem ersten Rohr 2 auf das zweite Rohr 3. Regelmäßig ist das Harz bereits nach kurzer Zeit abgebunden und bildet eine wirksame flüssigkeits- und wurzeldichte Barriere, wobei die Vergussmasse werkstoffseitig für bestimmte Abdichtungsfunktionen angepasst ist, beispielsweise als Abdichtung gegen ein Eindringen von Radon in das Innenraumvolumen der Rohre 2, 3 oder als Abdichtung gegen einen Austritt ölhaltiger Abwässer. Etwaige Maßtoleranzen der verbundenen Rohre 2, 3 werden durch die Vergussmasse ausgeglichen und damit einhergehend potentielle Leckagestellen von vorn herein verschlossen. Darüber hinaus wirkt die ausgehärtete Vergussmasse als Klebstoff verbindend das erste Rohr 2 mit dem zweiten Rohr 3 bzw. die Rohre 2, 3 mit dem Haltering 6.

Wie in vergrößerter Weise der Ausschnittansicht aus Fig. 1 zu entnehmen ist, liegt der Haltering 6 mit einem Krallenabschnitt 7 dem ersten Rohr 2 an, wobei innerhalb des Krallenabschnitts 7 mehrere Haltekrallen 8 in jeweils einer Mulde 9 angeordnet sind. Die Ausgestaltung der Mulden 9 bewirkt eine geschlossene äußere Umfangsfläche des Krallenabschnitts 7. Die Mulden 9 münden in die innere Oberfläche des Krallenabschnitts 7 und sind in radialer Richtung so tief bemessen, dass eine in eine Mulde 9 eingelegte Haltekralle 8 radial nach innen aus der Mulde 9 herausragt. Erkennbar ist, wie die Haltekralle 8 von außen in die Mantelfläche des ersten Rohres 2 eingreift. Die Gewindegänge der Madenschraube, welche die Haltekralle 8 bildet, verlaufen nahezu rechtwinklig zur Längsachse des ersten Rohres 2, so dass mittels der Haltekrallen 8 das erste Rohr 2 gegen Längsverschiebungen in dem Haltering 6 gesichert ist. Eine Halterippe 10 hintergreift die Wulst 4 des zweiten Rohres 3, so dass der Haltering 6 auf dem zweiten Rohr 3 formschlüssig gegen abziehende Kräfte gesichert ist, die den Haltering 6 von dem zweiten Rohr 3 und auf das erste Rohr 2 zu ziehen bestrebt sind.

Im Gegensatz zu einer Kleb- oder Schweißverbindung wirkt eine Haltekralle 8 einer Auszugsbewegung des ersten Rohres 2 auch nach einer Überlastung der Rohrverbindung entgegen, nachdem sich die beiden Rohre relativ zueinander bewegt haben, da die Verformbarkeit der Haltekrallen vorteilhafterweise geringer ist als die des ersten Rohres 2. Die Haltekrallen wirken über den gesamten Weg dem Ausziehen des ersten Rohres 2 entgegen, sodass es infolge der Auszugsbewegung zu einer Bildung von Riefen in der äußeren Oberfläche des ersten Rohres 2 käme.

In Fig. 2 ist eine perspektivische Ansicht auf die Rohrverbindung aus Fig. 1 dargestellt. Ersichtlich ist ein Haltering 6, welcher aus zwei Teilringen 11 besteht, die in Fig. 2 in ihrer montierten Anordnung wie in Fig. 1 dargestellt sind, in welcher sie einen geringen Abstand zueinander aufweisen. Zu erkennen sind Spannmittel 12, welche als Schraubverbindungen ausgestaltet sind, die beiden Teilringe 11 miteinander verbinden und in dem geringen Abstand zueinander halten. Es ist erkennbar, dass die Spannmittel 12 in axialer Richtung dort an dem Haltering 6 angeordnet sind, wo auch die Haltekrallen 8 liegen, und dass sie in der Nähe, also in dem Bereich liegen, wo die Halterippe 10 innen verläuft und die Dichtung 19 angeordnet ist.

Während der Injektion des Vergussmittels in den Hohlraum 20 wirken die Spannmittel 12 erstens dem Injektionsdruck entgegen und fixieren den Haltering 6 in der montierten Anordnung. Beim Aushärten der Vergussmasse sollte diese keinen wesentlichen Volumenverlust aufweisen, damit die Dichtung 19 weiterhin der Innenoberfläche des Halterings 6 bzw. den Außenoberflächen der Rohre 2, 3 an- bzw. aufliegt. Eine Druckberührung der Dichtung 19 mit den besagten Innen- und Außenoberflächen ist einer Abdichtung zuträglich. Daher kann einerseits vorgesehen sein, die Spannmittel 12 vor der Injektion des Vergussmittels noch nicht maximal zu spannen, derart, dass die Teilringe aneinander (noch) nicht berühren. Stattdessen werden die Spannmittel nach dem Aushärten des Vergussmittels noch einmal nachgespannt, um etwaige Volumenverluste der ausgehärteten Dichtung gegebenenfalls ausgleichen und eine maximale Abdichtungsleistung gewährleisten zu können. Insbesondere wenn keine Volumenreduktion eines Vergussmittels zu erwarten ist, kann anderseits vorgesehen sein, die Spannmittel bereits anfänglich unter Berücksichtigung des Drehmoments maximal zu spannen und anschließend eine Vergussmasse zu injizieren.

An der Außenseite des Halterings 6 verlaufen Aussteifungsrippen 14, und um deren Wirkung sicherzustellen und Sie nicht zu unterbrechen, sind die Spannmittel 12 in axialer Richtung zwischen den Aussteifungsrippen 14 angeordnet. Durch Betätigung der Spannmittel 12 können diese gelockert werden, so dass der Haltering 6 geöffnet und die Teilringe 11 in eine vormontierte Anordnung gebracht werden können, in welcher der Abstand zwischen den beiden Teilringen 11 größer als in Fig. 2 ist. In diesem vormontierten Zustand kann der Haltering 6 problemlos über das erste Rohr 2 und auch über das zweite Rohr 3, insbesondere auch über dessen Wulst 4 geführt werden.

Anschließend werden die beiden Teilringe 11 zusammengeführt, beispielsweise direkt durch Betätigung der Spannmittel 12, oder auch zunächst manuell und mit anschließender Betätigung der Spannmittel 12. Wie in Fig. 1 zu sehen, hintergreift im Ergebnis jedenfalls erstens die Halterippe 10 des Halterings 6 die Wulst 4 des zweiten Rohres 3, so dass der Haltering 6 auf dem zweiten Rohr 3 gegen abziehende Kräfte gesichert ist. Zweitens liegt der Haltering 6 nun mit einem Krallenabschnitt 7 dem ersten Rohr 2 an und die Haltekrallen 8 dringen in den Werkstoff des ersten Rohres 2 ein, so dass das erste Rohr 2 seinerseits in axialer Richtung unbeweglich am Haltering 6 festgelegt ist. Da der Krallenabschnitt 7 mit einem Absatz 15 in einen anschließenden Abschnitt des Halterings 6 übergeht und die Wulst 4 des zweiten Rohres 3 zwischen der Halterippe 10 und dem Absatz 15 verläuft, ist der Haltering 6 formschlüssig in beiden axialen Richtungen verschiebesicher an dem zweiten Rohr 3 festgelegt.

Für die Herstellung der Rohrverbindung 1 bedeutet dies, dass der Haltering 6 in der vormontierten Anordnung der Teilringe 11 auf das zweite Rohr 3 aufgeschoben werden kann, bis die Halterippe 10 die Wulst 4 des zweiten Rohres 3 hintergreift. Anschließend können die Spannmittel 12 gespannt werden, wobei bereits ein vergleichsweise kurzer Verstellweg der Spannmittel 12 ausreicht, um die Teilringe 11 aus der vormontierten Anordnung in die montierte Anordnung zu bewegen.

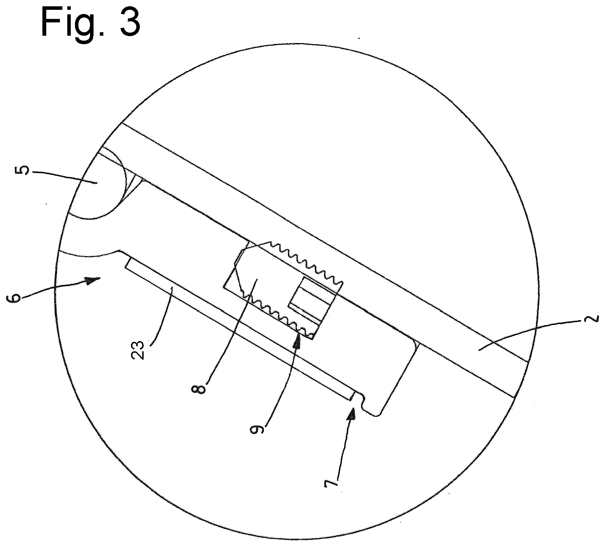

Fig. 3 zeigt in Art einer lupenartigen Vergrößerung einen Ausschnitt aus einer Rohrverbindung 1 ähnlich dem in Fig 1 dargestellten Ausführungsbeispiel. Das Ausführungsbeispiel der Fig 3 weist jedoch zusätzlich Spannmittel in Form eines Spannrings 23 auf, der um den Krallenabschnitt 7 verläuft und dessen Durchmesser in an sich bekannter Weise veränderlich ist, beispielsweise wie bei einer Schlauchschelle. Der Spannring 23 dient dazu, Druck auf die Haltekrallen 8 auszuüben, so dass diese in die Oberfläche des ersten Rohrs 2 eindringen, wie in Fig. 1 und 3 dargestellt.

Beispielhaft wird vorliegend von Rohren, Rohrverbindung oder Doppelmuffen gesprochen. Die Erfindung ist jedoch ebenso vorteilhaft einzusetzen bei anderen üblichen Formteilen wie Bögen, Abzweige oder Ähnliche.

### Bezugszeichen:

- 1: Rohrverbindung
- 2: Erstes Rohr
- 3: Zweites Rohr
- 4: Wulst
- 5: Dichtungsring
- 6: Haltering
- 7: Krallenabschnitt
- 8: Haltekralle
- 9: Mulde
- 10: Halterippe
- 11: Teilring
- 12: Spannmittel
- 14: Aussteifungsrippe
- 15: Absatz
- 19: Dichtung
- 20: Hohlraum
- 21: Sicke
- 22: Injektionskanal
- 23: Spannring

## Patentansprüche

1. Rohrverbindung (1),
mit zwei Rohren,
und mit einem Haltering (6),
wobei der Haltering (6) das eine Rohr (2, 3) umgreift und sich wenigstens abschnittsweise über das andere Rohr (2, 3) erstreckt,
und mit einem Hohlraum (20), welcher durch eine radial innere Oberfläche des Halterings (6) und radial äußere Oberflächen der Rohre (2, 3) begrenzt ist,
und mit einer Dichtung (19), welche in dem Hohlraum (20) angeordnet ist, in der Art, dass die Dichtung (19) einem Rohr (2, 3) umfangmäßig aufliegt,
wobei die Dichtung (19) sich von dem einen bis auf das andere Rohr (2, 3) erstreckt,
**dadurch gekennzeichnet,**
**dass** der Haltering (6) entlang seines Umfangs in Teilringe (11) unterteilt ist,
die sich jeweils um einen Umfangsabschnitt des ersten Rohres (2) und des zweiten Rohres (3) erstrecken und wobei zwei benachbarte Teilringe (11) durch Spannmittel (12) in der Art miteinander verbunden sind,
**dass** mittels der Spannmittel (12) die Teilringe (11) aus einer ersten Anordnung, in welcher die Teilringe (11) einen ersten Abstand zueinander aufweisen, in eine zweite Anordnung bewegbar sind, in welcher die Teilringe (11) einen zweiten Abstand zueinander aufweisen, der geringer ist als der erste Abstand,
und **dass** ein erstes Rohr (2) ein Spitzende aufweist, welches sich in ein Muffenende eines zweiten Rohres (3) erstreckt,
wobei das zweite Rohr (3) eine umlaufende Wulst (4) aufweist
und sich die Dichtung (19) von dem ersten Rohr (2) bis auf die Wulst (4) erstreckt.

2. Rohrverbindung (1) nach Anspruch 1,
**dadurch gekennzeichnet,**
**dass** die Dichtung (19) den Rohren (2, 3) und dem Haltering (6) anliegt.

3. Rohrverbindung (1) nach Anspruch 1 oder 2,
**dadurch gekennzeichnet,**
**dass** die Dichtung (19) einen Elastomerwerkstoff aufweist.

4. Rohrverbindung (1) nach einem der vorhergehenden Ansprüche,
**dadurch gekennzeichnet,**
**dass** die Dichtung (19) einen thermoplastischen Werkstoff aufweist.

5. Rohrverbindung (1) nach einem der vorhergehenden Ansprüche,
**dadurch gekennzeichnet,**
**dass** die Dichtung (19) als Dichtungsring ausgestaltet ist.

6. Rohrverbindung (1) nach einem der vorhergehenden Ansprüche,
**dadurch gekennzeichnet,**
**dass** die Dichtung (19) durch eine in den Hohlraum (20) eingebrachte Vergussmasse gebildet ist.

7. Rohrverbindung (1) nach einem der vorhergehenden Ansprüche,
**dadurch gekennzeichnet,**
**dass** die Dichtung (19) den Hohlraum (20) im Wesentlichen ausfüllt.

8. Rohrverbindung (1) nach einem der vorhergehenden Ansprüche,
**dadurch gekennzeichnet,**
**dass** der Haltering (6) Spannmittel (12) aufweist, welche dazu bestimmt sind, den Haltering (6) an den Rohren (2, 3) zu fixieren, in der Art, dass der Umfang des Halterings (6) mit zunehmender Verspannung abnimmt, wobei der verringerte Umfang eine gegen eine Rohrachse gerichtete Radialkraft bewirkt, welche auf die Dichtung (19) wirkt.

9. Rohrverbindung (1) nach Anspruch 8,
**dadurch gekennzeichnet,**
**dass** in axialer Richtung die Spannmittel (12) am Haltering (6) in dem Bereich angeordnet sind, wo im Hohlraum (20) die Dichtung (19) angeordnet ist.

10. Rohrverbindung (1) nach einem der vorhergehenden Ansprüche,
**dadurch gekennzeichnet,**
**dass** die beiden Rohre (2, 3) aus Kunststoff bestehen.

11. Rohrverbindung (1) nach einem der vorhergehenden Ansprüche,
**dadurch gekennzeichnet,**
**dass** die Dichtung (19)
• in ihrer Gebrauchsstellung in dem Hohlraum (20) angeordnet ist,
• einen ersten Abschnitt aufweist, der in der Gebrauchsstellung dem ersten Rohr (2) umfangmäßig anliegt und einen ersten Durchmesser aufweist,
• und sich von dem ersten Rohr (2) bis auf das zweite Rohr (3) erstreckt
• und einen zweiten Abschnitt aufweist, der in der Gebrauchsstellung dem zweiten Rohr (3) umfangmäßig anliegt und einen zweiten Durchmesser aufweist, welcher größer als der erste Durchmesser,
• und einen dritten Abschnitt aufweist, der sich in der Gebrauchsstellung bis auf eine um den Umfang des zweiten Rohres (3) umlaufende Wulst (4) erstreckt und einen dritten Durchmesser aufweist, welcher größer als der zweite Durchmesser.

12. Rohrverbindung (1) nach Anspruch 11,
**dadurch gekennzeichnet,**
**dass** die Dichtung (19) in der Art als Wurzelbarriere ausgestaltet ist, dass sie wurzelfeindliche Zuschlagstoffe enthält.

13. Rohrverbindung (1) nach Anspruch 11 oder 12,
**dadurch gekennzeichnet,**
**dass** die Dichtung (19) als Formteil ausgestaltet ist und in der Art als Wurzelbarriere ausgestaltet ist, dass ihre Formgebung mittels Rippen im Gebrauch Bereiche kleiner Kontaktflächen und hoher Flächenpressungen dort schafft, wo die Dichtung einem Rohr (2. 3) oder dem Haltering (6) anliegt.

## Claims

1. Pipe joint (1),
with two pipes,
and with a retaining ring (6),
wherein the retaining ring (6) engages around a pipe (2, 3) and extends at least in sections over the other pipe (2, 3),
and with a cavity (20), which is delimited by a radially inner surface of the retaining ring (6) and radially outer surfaces of the pipes (2, 3), and with a seal (19), which is arranged in the cavity (20) in such a way that the seal lies circumferentially on a pipe (2, 3),
wherein the seal (19) extends from one to the other pipe (2, 3),
**characterized in that**
the retaining ring (6) is divided along its circumference into partial rings (11),
which each extend around a circumferential section of the first pipe (2) and the second pipe (3), and wherein two adjacent partial rings (11) are connected to one another by clamping means (12) in such a way
that the partial rings (11), by way of the clamping means (12), are movable from a first arrangement, in which the partial rings (11) have a first distance from one another, into a second arrangement, in which the partial rings (11) have a second distance from one another, which is smaller than the first distance,
and **in that** a first pipe (2) has a spigot end, which extends into a socket end of a second pipe (3),
wherein the second pipe (3) has a circumferential bead (4),
and the seal (19) extends from the first pipe (2) to the bead (4).

2. Pipe joint (1) according to Claim 1,
**characterized in that**
the seal (19) lies against the pipes (2, 3) and the retaining ring (6).

3. Pipe joint (1) according to Claim 1 or 2, **characterized in that**
the seal (19) comprises an elastomer material.

4. Pipe joint (1) according to one of the preceding claims,
**characterized in that**
the seal (19) comprises a thermoplastic material.

5. Pipe joint (1) according to one of the preceding claims,
**characterized in that**
the seal (19) is formed as a sealing ring.

6. Pipe joint (1) according to one of the preceding claims,
**characterized in that**
the seal (19) is formed by a casting compound introduced into the cavity (20).

7. Pipe joint (1) according to one of the preceding claims,
**characterized in that**
the seal (19) fills out the cavity (20) substantially.

8. Pipe joint (1) according to one of the preceding claims,
**characterized in that**
the retaining ring (6) had clamping means (12), which are intended to fix the retaining ring (6) on the pipes (2, 3) in such a way that the circumference of the retaining ring (6) decreases with increasing tension, wherein the reduced circumference results in a radial force which is directed against a pipe axis and which acts on the seal (19).

9. Pipe joint (1) according to Claim 8,
**characterized in that**
in the axial direction the clamping means (12) are arranged on the retaining ring (6) in the region where the seal (19) is arranged in the cavity (20).

10. Pipe joint (1) according to one of the preceding claims,
**characterized in that**
the two pipes (2, 3) are made of plastic.

11. Pipe joint (1) according to one of the preceding claims,
**characterized in that**
the seal (190
• in its use position is arranged in the cavity (20),
• has a first section, which in the use position lies circumferentially on the first pipe (2) and has a first diameter,
• and extends from the first pipe (2) to the second pipe (3),
• and has a second section, which in the use position lies circumferentially on the second pipe (3) and has a second diameter which is larger than the first diameter,
• and has a third section, which in the use position extends as far as a bead (4) running around the circumference of the second pipe (3) and has a third diameter which is larger than the second diameter.

12. Pipe joint (1) according to Claim 11,
**characterized in that**
the seal (19) is formed in the manner of a root barrier and contains root-hostile aggregates.

13. Pipe joint (1) according to Claim 11 or 12, **characterized in that**
the seal (19) is formed as a moulded part and is formed in the manner of a root barrier, such that its shaping by means of ribs, in use, creates regions of small contact area and high pressure contact where the seal lies against a pipe (2, 3) or the retaining ring (6).

## Revendications

1. Raccord de tuyaux (1),
avec deux tuyaux,
et avec une bague de maintien (6),
la bague de maintien (6) entourant l'un des tuyaux (2, 3) et s'étendant au moins par sections sur l'autre tuyau (2, 3),
et avec une cavité (20) qui est délimitée par une surface radialement intérieure de la bague de maintien (6) et des surfaces radialement extérieures des tuyaux (2, 3),
et avec un joint d'étanchéité (19) disposé dans la cavité (20), de telle sorte que le joint d'étanchéité (19) est en appui circonférentiel contre l'un des tuyaux (2, 3), le joint d'étanchéité (19) s'étendant de l'un jusqu'à l'autre tuyau (2, 3),
caractérisé
**caractérisé en ce que** la bague de maintien (6) est subdivisée, le long de sa circonférence, en bagues partielles (11),
qui s'étendent chacune sur une section circonférentielle du premier tuyau (2) et du deuxième tuyau (3), et deux bagues partielles (11) voisines sont reliées entre elles par des moyens de serrage (12) de telle sorte
qu'au moyen des moyens de serrage (12), les bagues partielles (11) sont déplaçables d'une première configuration, dans laquelle les bagues partielles (11) présentent un premier écart entre elles, vers une deuxième configuration, dans laquelle les bagues partielles (11) présentent un deuxième écart entre elles, inférieur au premier écart,
et que l'un des tuyaux (2) présente une extrémité mâle qui s'étend dans une extrémité femelle d'un deuxième tuyau (3),
le deuxième tuyau (3) comportant un bourrelet (4) périphérique
et le joint d'étanchéité (19) s'étendant du premier tube (2) jusqu'au bourrelet (4).

2. Raccord de tuyaux (1) selon la revendication 1, **caractérisé**
**en ce que** le joint d'étanchéité (19) est en appui contre les tuyaux (2, 3) et la bague de maintien (6).

3. Raccord de tuyaux (1) selon la revendication 1 ou 2,
**caractérisé**
**en ce que** le joint d'étanchéité (19) comporte un matériau élastomère.

4. Raccord de tuyaux (1) selon l'une des revendications précédentes,
**caractérisé**
**en ce que** le joint d'étanchéité (19) présente un matériau thermoplastique.

5. Raccord de tuyaux (1) selon l'une des revendications précédentes,
**caractérisé**
**en ce que** le joint d'étanchéité (19) est configuré comme une bague d'étanchéité.

6. Raccord de tuyaux (1) selon l'une des revendications précédentes,
**caractérisé**
**en ce que** le joint d'étanchéité (19) est formé par une masse de moulage introduite dans la cavité (20).

7. Raccord de tuyaux (1) selon l'une des revendications précédentes,
**caractérisé**
**en ce que** le joint d'étanchéité (19) remplit essentiellement la cavité (20).

8. Raccord de tuyaux (1) selon l'une des revendications précédentes,
**caractérisé**
**en ce que** la bague de maintien (6) comporte des moyens de serrage (12) destinés à fixer la bague de maintien (6) sur les tuyaux (2, 3), de telle sorte que la circonférence de la bague de maintien (6) diminue à mesure du serrage, ladite circonférence réduite engendrant une force radiale dirigée vers un axe du tuyau, laquelle s'exerce sur le joint d'étanchéité (19).

9. Raccord de tuyaux (1) selon la revendication 8, **caractérisé**
**en ce que**, dans la direction axiale, les moyens de serrage (12) sont disposés sur la bague de maintien (6) dans la zone où, dans la cavité (20), est disposé le joint d'étanchéité (19).

10. Raccord de tuyaux (1) selon l'une des revendications précédentes,
**caractérisé**
**en ce que** les deux tuyaux (2, 3) sont constitués de manière plastique.

11. Raccord de tuyaux (1) selon l'une des revendications précédentes,
**caractérisé**
**en ce que** le joint d'étanchéité (19)
· est disposé, dans sa position d'utilisation, dans la cavité (20),
· comporte une première section qui, dans la position d'utilisation, est en appui circonférentiel contre le premier tuyau (2) et présente un premier diamètre,
· et s'étend du premier tuyau (2) jusqu'au deuxième tuyau (3),
· et comporte une deuxième section qui, dans la position d'utilisation, est en appui circonférentiel contre le deuxième tuyau (3) et présente un deuxième diamètre, supérieur au premier diamètre,
· et comporte une troisième section qui, dans la position d'utilisation, s'étend jusqu'à un bourrelet (4) s'étendant circonférentiellement autour du deuxième tuyau (3) et présente un troisième diamètre, supérieur au deuxième diamètre,

12. Raccord de tuyaux (1) selon la revendication 11, **caractérisé**
**en ce que** le joint d'étanchéité (19) est conçu comme une barrière anti-racines, en ce qu'il contient des additifs défavorables à la croissance des racines.

13. Raccord de tuyaux (1) selon la revendication 11 ou 12,
**caractérisé**
**en ce que** le joint d'étanchéité (19) est réalisé sous forme de pièce moulée et est conçu comme une barrière anti-racines, en ce que sa géométrie, au moyen de nervures, crée en usage des zones de faible surface de contact et de fortes pressions de surface aux endroits où le joint d'étanchéité est en appui contre un tuyau (2. 3) ou la bague de maintien (6).
